# EUROPÄISCHE PATENTSCHRIFT

(11) **EP 3 003 988 B1**
(45) Veröffentlichungstag und Bekanntmachung des Hinweises auf die Patenterteilung: **04.12.2019**
(21) Anmeldenummer: 14728592.8
(22) Anmeldetag: 10.06.2014
(51) Int. Cl.: C02F 1/46

(54) **EINRICHTUNG ZUR BEHANDLUNG VON FLUIDEN DURCH ERZEUGUNG VON KORONAENTLADUNGEN IN EINEM FLUIDVOLUMEN**
SYSTEM FOR TREATING FLUIDS BY PRODUCING CORONA DISCHARGES IN A FLUID VOLUME
SYSTÈME DE TRAITEMENT DE FLUIDES PAR GÉNÉRATION DE DÉCHARGES PAR EFFET DE COURONNE DANS LE VOLUME DE FLUIDE

(30) Priorität: 07.06.2013 DE 102013105917
(43) Veröffentlichungstag der Anmeldung: 13.04.2016
(73) Patentinhaber: Leibniz-Institut für Plasmaforschung und Technologie e.V., 17489 Greifswald (DE)
(72) Erfinder: KOLB, Juergen, F., 17489 Greifswald (DE); WELTMANN, Klaus-Dieter, 18609 Ostseebad Binz (DE); BANASCHIK, Robert, 18184 Ikendorf (DE); ZHUANG, Jie, 17489 Greifswald (DE)
(74) Vertreter: Schulz Junghans Patentanwälte PartGmbB
(86) Internationale Anmeldenummer: PCT/EP2014/061991
(87) Internationale Veröffentlichungsnummer: WO 2014/195519

(56) Entgegenhaltungen:
- DE-A1- 19 633 368
- DE-T2- 69 813 856
- US-A- 5 603 893
- US-A- 5 855 855
- US-A1- 2005 106 085
- US-A1- 2010 240 943
- US-A1- 2011 190 565
- US-A1- 2011 296 996
- POKRYVAILO A ET AL: "High-Power Pulsed Corona for Treatment of Pollutants in Heterogeneous Media", IEEE TRANSACTIONS ON PLASMA SCIENCE, IEEE SERVICE CENTER, PISCATAWAY, NJ, US, Bd. 34, Nr. 5, 1. Oktober 2006 (2006-10-01), Seiten 1731-1743, XP011321361, ISSN: 0093-3813, DOI: 10.1109/TPS.2006.881281
- SUN B ET AL: "USE OF A PULSED HIGH-VOLTAGE DISCHARGE FOR REMOVAL OF ORGANIC COMPOUNDS IN AQUEOUS SOLUTION", JOURNAL OF PHYSICS D: APPLIED PHYSICS, INSTITUTE OF PHYSICS PUBLISHING LTD, GB, Bd. 32, Nr. 15, 7. August 1999 (1999-08-07), Seiten 1908-1915, XP000923844, ISSN: 0022-3727, DOI: 10.1088/0022-3727/32/15/319
- MUHAMMAD ARIF MALIK ET AL: "Water purification by electrical discharges; Water purification by electrical discharges", PLASMA SOURCES SCIENCE AND TECHNOLOGY, INSTITUTE OF PHYSICS PUBLISHING, BRISTOL, GB, Bd. 10, Nr. 1, 1. Februar 2001 (2001-02-01), Seiten 82-91, XP020069859, ISSN: 0963-0252, DOI: 10.1088/0963-0252/10/1/311
- J.-S. CHANG ET AL: "Corona discharge processes", IEEE TRANSACTIONS ON PLASMA SCIENCE, Bd. 19, Nr. 6, 1. Januar 1991 (1991-01-01) , Seiten 1152-1166, XP055131531, ISSN: 0093-3813, DOI: 10.1109/27.125038
- JARRIGE JULIEN ET AL: "Decomposition of three volatile organic compounds by nanosecond pulsed corona discharge: Study of by-product formation and influence of high voltage pulse parameters", JOURNAL OF APPLIED PHYSICS, AMERICAN INSTITUTE OF PHYSICS, US, Bd. 99, Nr. 11, 8. Juni 2006 (2006-06-08), Seiten 113303-113303, XP012083319, ISSN: 0021-8979, DOI: 10.1063/1.2202700

## Beschreibung

Die Erfindung betrifft eine Einrichtung zur Behandlung von Fluiden in Form von Trinkwasser, Brauchwasser, Abwasser oder wässrigen Lösungen durch Erzeugung von Koronaentladungen in einem Fluidvolumen, wobei die Einrichtung eine Elektrodenanordnung mit mindestens einer zylinderförmigen Kathode und mit mindestens einer im Innenraum der Kathode und im Abstand zur Kathode angeordneten linienförmigen Anode und eine Hochspannungseinheit zur Erzeugung von Hochspannungspulsen hat, wobei die Hochspannungseinheit mit der Elektrodenanordnung verbunden ist, um die mindestens eine Anode mit Hochspannungspulsen zu beaufschlagen, und wobei die Elektrodenanordnung zur Aufnahme des zu behandelnden Fluids im Raum zwischen der mindestens einen Kathode und der mindestens einen Anode eingerichtet ist. Eine Anzahl von dielektrischen Flächenelementen erstreckt sich ausgehend von der mindestens einen linienförmigen Anode radial in der Richtung der zugeordneten zylinderförmigen Kathode.

Zur Reinigung, Desinfektion und/oder Dekontamination von Fluiden, insbesondere von Trinkwasser, Brauchwasser und Abwasser ist bekannt, eine Plasmabehandlung einzusetzen. Dabei kann das Plasma nicht nur in einer gasförmigen Phase außerhalb des Fluidvolumens erzeugt und dann mit dem Gas in das Fluidvolumen eingeleitet werden. Vielmehr kann in dem Fluidvolumen selbst durch Erzeugung von Koronaentladungen Plasma zur Fluidbehandlung erzeugt werden.

M. A. Malik, Y. Minamitani, S. Xiao, J. F. Kolb und K. H. Schoenbach: Streamers in Water Filled Wire-Cylinder and Packed-Bed Reactors, in: IEEE Transactions on Plasma Science, Vol. 33, No. 2, April 2005, Seiten 490-491 offenbaren die Erzeugung von Koronaentladungen in einem Wasservolumen. Hierbei werden Hochspannungspulse mit Pulsdauern von 500 Nanosekunden (FWHM) mit Pulsanstiegszeiten von 80 bis 150 Nanosekunden und Pulsabfallzeiten von 400 Nanosekunden bei einer Hochspannung bis zu 90 Kilovolt beschrieben. In den Plasmakanälen werden aktive Spezies, wie Wasserstoffperoxid und Hydroxid erzeugt, die aufgrund ihrer kurzen Lebensdauer aber nicht hinreichend mit zu behandelnden Verunreinigungen im Fluidvolumen interagieren können. Durch das Auffüllen des Fluidvolumens mit Silikagelperlen (Kieselgelkugeln) mit einem Durchmesser von 3 bis 5 mm wird eine homogenere Plasmaverteilung im Reaktorvolumen erreicht.

Aus M. A. Malik: Water Purification by Plasmas: Which Reactors are Most Energy Efficient?, in: Plasma Chem Plasma Process (2010) 30:21-31 und aus M. A. Malik : Water purification by electrical discharges, in Plasma Sources Science and Technology (2001), Bd 10, Nr 1, 82-91 ist bekannt, dass die pulsbetriebenen Reaktoren, bei denen Plasma in einer Gasphase gebildet und die zu behandelnde Fluidlösung eingesprüht wird, sehr effizient sind.

Z. Machala, B. Tarabová, M. Pilach, K. Hensel, M. Jander, E. Špetlíková, P. Lukes: Plasma Agents in Water and Surface Decontamination, in: NATO Advanced Research Workshop, Plasma for Bio-Decontamination, Medicine and Food Security, Jasná, Slovakia, March 15-18, 2011, Ed. Karol Hensel und Zdenko Machala, Seiten 45-46 beschreiben die Bio-Dekontamination von Wasser und Oberflächen mit Hochspannungsentladungen unter Atmosphärendruck. Das zu behandelnde Wasser wird in das hierdurch erzeugte kalte Plasma gesprüht. Das kontaminierte Wasser fließt direkt durch die hohle Nadelelektrode und damit durch die plasmaaktive Zone. Das kalte Atmosphärendruckplasma wird mit wiederholten Pulsen mit einer Pulsdauer im Nanosekundenbereich erzeugt.

Aus WO 97/37938 A1 ist bekannt, ein oxidierendes gasförmiges Plasma außerhalb des Fluidvolumens zu erzeugen und als Plasmagasstrom in ein zu behandelndes Fluidvolumen einzuführen.

WO 2009/006993 A2 offenbart einen Reaktor zur hochspannungsimpulstechnischen Desinfektion bakterienverseuchter Flüssigkeiten mit gepulster Unterwasserkoronaentladung und ein Verfahren hierzu. Auf der mit Hochspannungspotential beaufschlagbaren Elektrode befindet sich eine Keramikschicht. Hierbei werden Hochspannungspulse mit Pulsdauern von über 100 Nanosekunden und bevorzugt 200 bis 300 Nanosekunden Pulsdauer bei Anstiegszeiten des Hochspannungspulses unter 100 Nanosekunden eingesetzt.

US 5,603,893 A offenbart einen Plasmareaktor zur Behandlung von Gasströmen mit sägezahnförmigen Elektroden, die mit Pulsen von einer Pulsbreite von 20 bis 100 Nanosekunden und kurzen Pulsanstiegszeiten von 10 bis 20 Nanosekunden beaufschlagt werden.

US 2005/0106085 A1 offenbart einen Reaktor zur Behandlung eines Gasstroms mit Plasma.

US 2011/0190565 A1 beschreibt einen Plasmareaktor zur Umwandlung von Gas in Flüssigtreibstoff mit Hilfe von Nadelelektroden. Dabei wird keine Koronarentladung, sondern eine Gleitbogenentladung eingesetzt.

US 5,855,855 A offenbart einen Abgasreinigungsreaktor mittels Koronaentladung in einem rohrförmigen Reaktionsraum.

DE 698 13 856 T2 beschreibt einen Koronaentladungsreaktor zur Verwendung beim Verarbeiten gasförmiger Medien mittels einer elektrischen Entladung mit mehreren individuellen Reaktorkammern, in denen die elektrischen Pulse simultan angelegt werden.

Jen-Shih Chang, Phil A. Lawless und Toshiakia Yamamoto: Corona Discharge Processes, in: IEEE Transactions on Plasma Science, Vol. 19, No. 6, Dezember 1991, Seiten 1152-1166 beschreiben Koronaentladungsprozesse in Gasen unter anderem in einem mit dielektrischen Pellets gefüllten Reaktor zur Erhöhung des elektrischen Feldes zur Abgasreinigung.

US 2010/0240943 A1 beschreibt eine Vorrichtung zur Reduzierung organischer Verunreinigungen von volatilen organischen Verbindungen in einer wässrigen Umgebung mittels Koronaentladung. Dabei werden kurze Hochspannungsimpulse mit Pulsbreiten von 40 Nanosekunden und Pulsfrequenzen bis zu 1000 Hertz bei Pulsspannungen bis zu 40 Kilovolt vorgeschlagen.

A. Pokryvailo, M. Wolf, Y. Yankelevich, S. Wald, L. R. Grabowski, E. M. van Veldhuizen, W. R. Rutgers, M. Reiser, B. Glocker, T. Eckhardt, P. Kempenaers und A. Welleman: High-Power Pulsed Corona for Treatment of Pollutants in Heterogenenous Media, in: IEEE Transactions on Plasma Science, Vol. 34, No. 5, Oktober 2006, Seiten 1731 bis 1743 beschreiben die Behandlung verunreinigter Gas- oder Wasserströme mit gepulster Koronaentladung. Dabei werden Pulsdauern von 100 Nanosekunden bei Pulswiederholraten von 500 Hertz vorgeschlagen.

Ausgehend hiervon ist es Aufgabe der vorliegenden Erfindung eine verbesserte Einrichtung zur Behandlung von Fluiden durch Erzeugung von Koronaentladungen in einem Fluidvolumen zu schaffen, wobei eine in dem Fluidvolumen befindliche Elektrodenanordnung mit Hochspannungspulsen beaufschlagt wird.

Die Aufgabe wird durch die Einrichtung mit den Merkmalen des Anspruchs 1 gelöst. Vorteilhafte Ausführungsformen sind in den Unteransprüchen beschrieben.

Unter einem Fluid im Sinne der vorliegenden Erfindung wird Trinkwasser,

Brauchwasser, Abwasser oder eine sonstige wässrige Lösung verstanden.

Es wird vorgeschlagen, dass sich ausgehend von der mindestens einen linienförmigen Anode radial in Richtung der zugeordneten Kathode eine Anzahl von dielektrischen Flächenelementen erstrecken. So ist eine koaxiale, linienförmige Anode im Innenraum einer zylinderförmigen Kathode angeordnet. Von dieser koaxialen linearen (Draht- bzw. Stab-)Anode erstrecken sich dann somit sternförmig dielektrische Flächenelemente radial in Richtung der zylinderförmigen Kathode, die die Anode umgibt. Diese dielektrischen Flächenelemente spannen dabei eine Fläche entlang der Längserstreckungsrichtung der Anode und radial auf einer Strecke zwischen Anode und Kathode auf. Mit solchen sternförmig im Raum zwischen Anode und Kathode angeordneten dielektrischen Flächenelementen lässt sich die Verteilung der Koronaentladungen im Fluidvolumen und die Durchdringung des zu behandelnden Fluids wesentlich verbessern.

Denkbar ist dabei auch, dass eine Mehrzahl von dielektrischen Scheiben in Längserstreckungsrichtung einer gemeinsamen Anode hintereinander angeordnet sind. Die Anode erstreckt sich dabei durch die dielektrischen Scheiben. Die dielektrischen Scheiben erstrecken sich wiederum radial in Richtung der zugeordneten Kathode. Die dielektrischen Scheiben haben dabei Durchlassöffnungen zum Durchlassen des zu behandelnden Fluids.

Mit Hilfe dieser hintereinander angeordneten dielektrischen Scheiben wird das Fluidvolumen aufgeteilt und eine verbesserte Verteilung der Koronaentladungen im Fluidvolumen erreicht. Dabei ist es vorteilhaft, wenn eine sich linienförmig koaxial zu einer zylinderförmigen Kathode erstreckende (Draht-/Stab-)Anode im Innenraum der zylinderförmigen Kathode erstreckt. Diese Anode ist dabei vorzugsweise koaxial zu den dielektrischen Scheiben angeordnet. Denkbar ist aber auch, dass sich mehrere solcher linienförmiger Anoden durch die hintereinander angeordneten dielektrischen Scheiben erstrecken, wobei diese Anoden und die dielektrischen Scheiben von einer zylinderförmigen Kathode umgeben sind, welche das Fluidvolumen begrenzt.

Die Einrichtung basiert auf der Nutzung von sehr kurzen Hochspannungspulsen mit Pulsdauern im Bereich von 50 bis 400 Nanosekunden und insbesondere von sehr kurzen Pulsanstiegszeiten der Hochspannungspulse im Bereich von 1 bis 40 Nanosekunden, um eine sehr effiziente Fluidbehandlung in nahezu dem gesamten Fluidvolumen zu ermöglichen. Die sehr kurzen Pulsanstiegszeiten führen zu großen Schockwellen und zu einer schnellen Übertragung der Energie auf die Elektronen und damit zu effizienten reaktionschemischen Prozessen. Durch die sehr kurzen Hochspannungspulse mit sehr steiler Flanke wird zudem die Gefahr von Überschlägen reduziert, d.h. der Übergang von ausgedehnten Koronaentladungen zu lokalisierten Funkenentladungen. Zudem wird sichergestellt, dass möglichst wenig Energie zum Aufheizen von Plasma und des Fluids verschwendet wird.

Durch die sehr kurzen Pulsanstiegszeiten im Bereich von 1 bis 40 Nanosekunden bei Pulsdauern im Bereich von 50 bis 400 Nanosekunden werden Strompulse in der Koronaentladung mit sehr hohen Stromspitzen und wesentlich kürzeren Pulszeiten erreicht. Bei einer Pulsdauer von etwa 250 Nanosekunden (FWHM) werden bspw. Stromperioden von etwa 100 Nanosekunden erzielt, wobei der Strompuls signifikant gedämpft ist. Die steilen Anstiegsflanken der kurzen Hochspannungspulse führen somit zu sehr kurzen und scharfen Strompulsen mit der Folge, dass die Fluidbehandlung im Fluidvolumen sehr effizient wird.

Die Pulswiederholrate liegt vorzugsweise im Bereich von 10 bis 1000 Hertz. Die Ruhezeit zwischen zwei aufeinander folgenden Hochspannungspulsen kann in einer Ausführungsform länger als die Pulslänge der Hochspannungspulse sein. Damit wird sichergestellt, dass das erzeugte Plasma zunächst abgeklungen ist.

Die Pulswiederholrate liegt vorzugsweise im Bereich von 50 bis 150 Hertz.

Die Spannungsamplitude der Hochspannungspulse sollte größer als 5 Kilovolt sein und bevorzugt im Bereich von 50 bis 200 Kilovolt und besonders bevorzugt bis 200 Kilovolt liegen. In diesem Bereich lassen sich Koronaentladungen realisieren, deren Energie im Wesentlichen in zur Behandlung des Fluids nutzbare chemische und physikalische Reaktionen umgesetzt wird, ohne dass eine signifikante Gefahr von Ladungsdurchschlägen zur Kathode entsteht und Energie nutzlos in eine Erwärmung des Fluids transferiert wird. In diesem Bereich wird aber auch sichergestellt, dass die resultierenden Strompulse eine hinreichende Amplitude aufweisen.

Eine Elektrodenanordnung kann eine Mehrzahl von Anoden haben, wobei die Anoden oder Gruppen von Anoden alternierend mit den Hochspannungspulsen beaufschlagt werden. Auf diese Weise kann eine großflächige Verteilung der Koronaentladungen im Fluidvolumen sichergestellt werden. Nachdem eine Anode oder eine Gruppe von Anoden mit einem Hochspannungspuls beaufschlagt wurde, kann die Abklingzeit genutzt werden, um eine andere Anode oder eine andere Gruppe von Anoden mit einem Hochspannungspuls zu beaufschlagen, ohne dass die dort entstehende Koronaentladung durch die Abklingphase in dem Bereich der anderen vorher beaufschlagten Anode oder Gruppe von Anoden beeinträchtigt wird. Somit können sehr effizient in einem kleinen Zeitfenster alternierend hintereinander verschiedene räumliche Bereiche des Fluidvolumens mit Koronaentladungen behandelt werden.

Optional ist denkbar, dass die Mehrzahl von Anoden simultan, d.h. gleichzeitig mit Hochspannungspulsen beaufschlagt werden.

Die mindestens eine Anode der Elektrodenanordnung kann um eine Drehachse rotierbar angeordnet sein. Dabei ist eine Antriebseinheit zur Rotation der mindestens einen Anode um die Drehachse während der Behandlung des Fluids vorgesehen. Auf diese Weise gelingt es die Koronaentladungen im Fluidvolumen bestmöglich zu verteilen. Die Behandlung des Fluids wird zudem durch Verwirbelungen des Fluids verbessert, die durch die Rotation der Anoden verursacht werden. Die Rotationsfrequenz der Anoden liegt vorzugsweise im Bereich der Pulswiederholrate. Genau wie bei dem alternierenden Beaufschlagen unterschiedlicher Anoden gelingt es durch die Rotation der mindestens einen Anode um eine Drehachse Koronaentladungen zeitlich hintereinander in unterschiedlichen Bereichen des Fluidvolumens zu erzeugen, wobei die Koronaentladungen nicht durch das Abklingverhalten von unmittelbar vorher erzeugten Koronaentladungen beeinträchtigt werden.

Die Koronaentladungen entstehen bevorzugt an Randkanten und insbesondere an scharfkantigen Abschnitten der Anode. Durch eine gezackte bzw. scharfkantige Oberfläche der Anode mit Randkanten kann erreicht werden, dass möglichst viele Koronaentladungen bei einer Beaufschlagung der Anode mit Hochspannungspulsen erreicht wird.

Entsprechend der oben beschriebenen Aufteilung der elektrisch wirksamen Anode in eine Mehrzahl von Anoden ist auch denkbar, die Kathode in eine Mehrzahl von räumlich voneinander beabstandeten Kathoden aufzuteilen, und diese simultan oder alternierend anzusteuern. Denkbar ist auch eine Aufteilung sowohl der Anode als auch der Kathode in eine Mehrzahl von separaten Anoden-Kathoden-Paaren.

Die mindestens eine Anode kann von mindestens einem perforierten, Öffnungen aufweisenden Rohr umgeben sein. Das Rohr kann einen Gaseinlass zur Zufuhr von Reaktionsgas haben. Die durch die Beaufschlagung der Anode mit Hochspannungspulsen erzeugten Koronaentladungen brechen dabei die Gasmoleküle in wirksame Radikale auf, wie z.B. in atomares Sauerstoff. Die Koronaentladungen erstrecken sich dabei von der Anode ausgehend durch die Öffnungen in das Fluidvolumen hinein. Die Filamente der Koronaentladungen interagieren dabei sowohl mit dem eingeleiteten Reaktionsgas und dem umgebenen Fluid.

Die Erfindung wird nachfolgend anhand von Ausführungsbeispielen mit den beigefügten Zeichnungen näher erläutert. Es zeigen:
- Figur 1: - Skizze einer Einrichtung zur Fluidbehandlung mit einer Elektrodenanordnung und einer Hochspannungseinheit;
- Figur 2: - Diagramm eines auf die Elektrodenanordnung beaufschlagten Hochspannungspulses mit resultierendem Strompuls;
- Figur 3: - Skizze der Einrichtung aus Figur 1 mit bei Beaufschlagung mit Hochspannungspulsen resultierenden Koronaentladungen im Fluidvolumen;
- Figur 4: - Skizze einer Einrichtung mit zusätzlicher Gaszufuhr;
- Figur 5: - Skizze einer Einrichtung zur Fluidbehandlung mit gelochter Umhüllung der Anode;
- Figur 6: - Skizze einer Einrichtung zur Fluidbehandlung mit einer Füllung des Volumens mit Materialien in funktionaler oder katalytischer Oberfläche;
- Figur 7: - Skizze einer erfindungsgemäßen Ausführungsform der Einrichtung mit dielektrischen Scheiben;
- Figur 8: - Skizze einer erfindungsgemäßen Ausführungsform der Einrichtung mit sich sternförmig radial von der Anode zur Kathode erstreckenden dielektrischen Flächenelementen;
- Figur 9: - Skizze einer erfindungsgemäßen Einrichtung mit einer Mehrzahl von nebeneinander angeordneten Elektrodenanordnungen;
- Figur 10: - Skizze einer Einrichtung zur Fluidbehandlung mit einer drehbar angeordneten Elektrodenanordnung und einer Antriebseinheit;
- Figur 11: - Skizze einer Einrichtung zur Fluidbehandlung mit mehreren alternierend mit Hochspannungspulsen beaufschlagten Anoden;
- Figur 12: - Skizze einer Einrichtung zur Fluidbehandlung mit mehreren Gruppen von Anoden, die alternierend mit Hochspannungspulsen beaufschlagt werden.

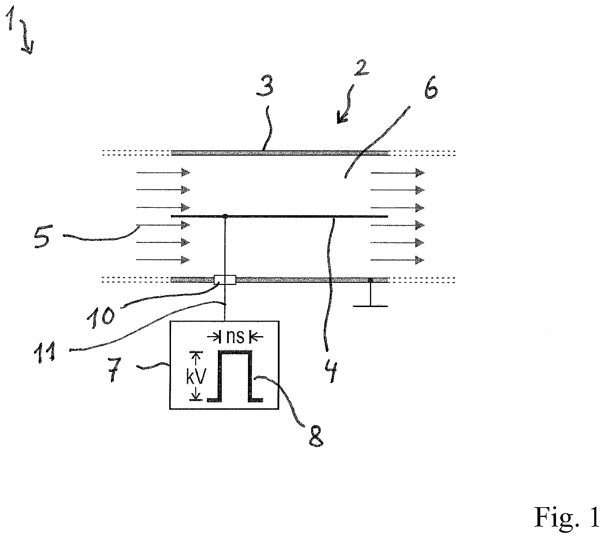

Figur 1 lässt eine Skizze einer aufgrund der fehlenden dielektrischen Flächenelemente nicht erfindungsgemäßen Einrichtung 1 zur Behandlung von Fluiden, in Form von Trinkwasser, Brauchwasser oder Abwasser oder sonstigen wässrigen Lösungen erkennen. Mit dieser Einrichtung 1 können Verunreinigungen, wie Bakterien, Viren, Pilze oder chemische Rückstände unschädlich gemacht werden. So ist die Einrichtung 1 z. B. geeignet pharmazeutische Rückstände zu entfernen. Die Einrichtung 1 hat hierzu eine Elektrodenanordnung 2, die aus einer zylinderförmigen Kathode 3 und einer sich linienförmig im Innenraum der Kathode 3 koaxial erstreckende Anode 4 gebildet ist. Die Anode 4 kann bspw. eine Stabelektrode oder eine Drahtelektrode sein. Besonders geeignet ist eine Elektrode aus Wolfram oder eine Wolfram-Legierung.

Erkennbar ist, dass das zu behandelnde Fluid 5 in einem Fluidstrom durch das Fluidvolumen 6 geleitet wird, welches durch die zylinderförmige Kathode 3 der Elektrodenanordnung 2 begrenzt ist. Dabei kann die zylinderförmige Kathode 3 aber auch eine gitterförmige Struktur sein, die an eine zylinderförmige, nicht leitende Wand angrenzt, wie bspw. ein Glasgefäß oder ein Glasrohr. Die Kathode 3 ist elektrisch geerdet. Die Anode 4 ist mit einer Hochspannungseinheit 7 verbunden, die zur Erzeugung von Hochspannungspulsen 8 eingerichtet ist. Hierzu ist bspw. die Verwendung einer mehrstufigen Marx-Bank oder gestaffelter Blumlein-Generatoren geeignet.

Bei Beaufschlagung der Anode 4 mit den Hochspannungspulsen 8 werden Koronaentladungen entlang der Erstreckungsrichtung der linienförmigen Anode 4 gebildet, die sich radial zur umgebenden Kathode 3 hin erstrecken. Die Spannungsamplitude der Hochspannungspulse 8 ist dabei so an den radialen Abstand zwischen Anode 4 und Kathode 3 und das zu behandelnde Fluid insbesondere im Hinblick auf die Leitfähigkeit des Fluids anzupassen, dass Spannungsdurchschläge möglichst verhindert werden.

Die Anode 4 wird durch die Hochspannungseinheit 7 nunmehr mit einer Folge von Hochspannungspulsen 8 beaufschlagt, die eine Pulsdauer im Bereich von 50 bis 400 Nanosekunden (FWHM) haben. Die Pulsanstiegszeiten der Hochspannungspulse 8 sind dabei durch geeignete Einrichtung der Hochspannungseinheit 7 so eingestellt, dass diese im Bereich von 1 bis 40 Nanosekunden liegen. Damit ist die ansteigende Flanke der Hochspannungspulse 8 sehr steil, was zu einer wesentlich verbesserten Effizienz der Fluidbehandlung führt. Durch die sehr kurzen und steilen Pulse wird erreicht, dass die Energie sehr schnell auf die umgebenden Elektronen des Fluids 5 übertragen wird. Dies führt zu einem Plasma, das die elektrische Energie eine zur Behandlung des Fluids 5 notwendige Reaktionschemie optimal umsetzt, ohne dass ein wesentlicher Anteil der Energie in Aufheizprozesse des Plasmas und des Fluids 5 verschwendet wird. Durch die sehr steilen und schnellen Hochspannungspulse 8 kann die Intensität der durch das Plasma resultierenden Schockwellen erhöht werden, was die Effizienz der Fluidbehandlung verbessert.

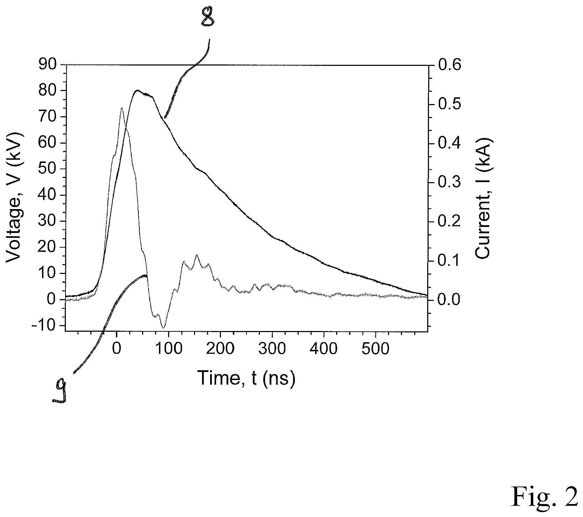

Figur 2 lässt ein Diagramm eines Hochspannungspulses 8 erkennen. Deutlich wird, dass der Hochspannungspuls eine Pulsdauer von etwa 250 Nanosekunden (FWHM) aufweist. Die Pulsdauer ist somit durch die Halbwertsbreite der Spannungsamplitude des Hochspannungspulses (Füll Width at Half Maximum = FWHM) definiert. Der Beginn und das Ende der Pulsdauer werden dabei durch die Hälfte der maximalen Spannungsamplitude definiert. In dem vorliegenden Beispiel beträgt die maximale Spannungsamplitude 80 Kilovolt. Die Pulsdauer ist somit durch die Zeit zwischen den Durchgängen der Spannungsamplitude durch das halbe Spannungsmaximum, d. h. bei 40 Kilovolt definiert.

Erkennbar ist, dass der Hochspannungspuls eine im Verhältnis zur Pulsdauer sehr kurze Anstiegszeit von etwa 30 Nanosekunden hat. Die Pulsanstiegszeit bestimmt sich aus dem Beginn des Hochspannungspulses bis zum Zeitpunkt t = 0 bei der Hälfte des Spannungsmaximums und dem Erreichen des Spannungsmaximum.

Auf der Leitung zur Anode 4 stellt sich bei Beaufschlagung der Anode 4 mit dem Hochspannungspuls 8 ein Strompuls 9 ein, der eine sichtbar gedämpfte Oszillation mit einem Spitzenstrom von 500 Ampere (0,5 kA) und eine Pulsdauer von etwa 100 Nanosekunden hat. Dieser kurze, scharfe und gedämpfte Strompuls 9 ist das Resultat des kurzen Spannungspulses 8 mit sehr steiler Anstiegsflanke.

Mit Hilfe der Beaufschlagung der Anode 4 mit solchen Hochspannungspulsen 8 werden Koronaentladungen im Fluidvolumen 6 hervorgerufen. Dabei werden Hydroxyl-Radikale erzeugt, die aus einem Wasserstoff- und einem Sauerstoffatom bestehen und ein relativ großes Redoxpotential im Bereich +2,8 Volt haben. Solche Hydroxyl-Radikale sind neben Fluor eine der stärksten Oxidationsmittel und geeignet auch solche stabilen Komponenten aufzuspalten, die durch übliche Oxidationsmittel wie Chlor oder Ozon nicht hinreichend behandelt werden können. Die durch die Koronaentladungen mittels Plasmavorgängen erzeugten Hydroxyl-Radikale haben sich insbesondere als geeignet herausgestellt, um pharmazeutische Rückstände im Wasser abzubauen. Die Erzeugung von Koronaentladungen direkt im Fluid führt zu hohen Konzentrationen von Hydroxyl-Radikalen, die direkt im zu behandelnden Fluidvolumen 6 entstehen. Solche Hydroxyl-Radikale haben eine sehr geringe Lebensdauer von weniger als einer Millisekunde im Fluid, sodass die effiziente Ausbreitung im gesamten Fluidvolumen 6 für die Wirksamkeit der Fluidbehandlung entscheidend ist.

Neben den durch die Koronaentladungen erzeugten Hydroxyl-Radikalen führen auch die starken gepulsten elektrischen Felder im Fluidvolumen 6 zur effizienten Inaktivierung von Mikroorganismen im Fluid 5. Zudem wird ultraviolettes Licht durch die Filamente der Koronaentladungen imitiert, was zu weiteren mikrobiologischen Inaktivierungsmechanismen führt. Zudem entstehen insbesondere durch die kurzen Pulsanstiegszeiten bei den kurzen Pulsdauern sehr starke Schockwellen in der Nähe der Filamente der Koronaentladungen, die Zellstrukturen effizient zerstören.

In der einfachsten Ausführungsform der Einrichtung 1 ist die Anode 4 als Draht- oder Stabelektrode koaxial im Fluidvolumen 6 zur zylinderförmigen Kathode 3 angeordnet. Die zylinderförmige Kathode 3 kann dabei z.B. ein Abschnitt eines Metallrohrs sein, das als Masseelektrode dient und geerdet ist. Auf diese Weise können existierende Rohrleitungs- oder Pumpsysteme genutzt und durch Einbau einer Anode 4 und Anschaltung einer Hochspannungseinheit 7 modifiziert werden. Es ist dann lediglich eine isolierte Durchführung 8 für die Zuleitung 11 zwischen Hochspannungseinheit 7 und Anode 4 erforderlich, mit der die Anode 4 mit den Hochspannungspulsen 8 beaufschlagt wird.

Die Anode 4 wird bei der Beaufschlagung mit Hochspannungspulsen stark beansprucht und kann insbesondere im Fall einer Drahtelektrode durch eine Fördereinheit optional kontinuierlich zugeführt und damit ausgewechselt werden.

Der Durchmesser der zylinderförmigen Kathode 3 hängt von den Betriebsbedingungen ab und kann vorzugsweise im Bereich von 1 bis 50 cm Durchmesser und bevorzugt im Bereich von 5 bis 10 cm Durchmesser liegen. Um größere Fluidvolumen oder Fluidströme zu behandeln sind modulare Einrichtungen 1 denkbar, bei denen mehrere solcher Elektrodenanordnungen mit solchen relativ schmalen Rohrsystemen parallel geschaltet sind.

Die Hochspannungselektrode, d. h. die Anode 4 ist mit der Hochspannungseinheit 7 über die Zuleitung 11 verbunden, welche die Hochspannungspulse 8 erzeugt und damit die Hochspannungselektrode 4 beaufschlagt. Dabei ist der Durchmesser der Kathode bzw. der Abstand zwischen Anode 4 und Kathode 3 an die Leitfähigkeit des zu behandelnden Fluids 5 und die gewählte maximale Spannungsamplitude der Hochspannungspulse 8 und die Pulsdauer so anzupassen, dass Durchschläge möglichst sicher verhindert werden.

Für eine effiziente Fluidbehandlung sollte die Spannungsamplitude der Hochspannungspulse 8 mehr als 5 Kilovolt betragen. Für einen Rohrdurchmesser der Kathode 3 im Bereich von 5 bis 10 cm Durchmesser sollte die Spannungsamplitude der Hochspannungspulse 8 vorzugsweise im Bereich von 50 bis 150 Kilovolt gewählt werden. Damit lässt sich eine sehr effiziente Fluidbehandlung unter Vermeidung von Durchschlägen erreichen.

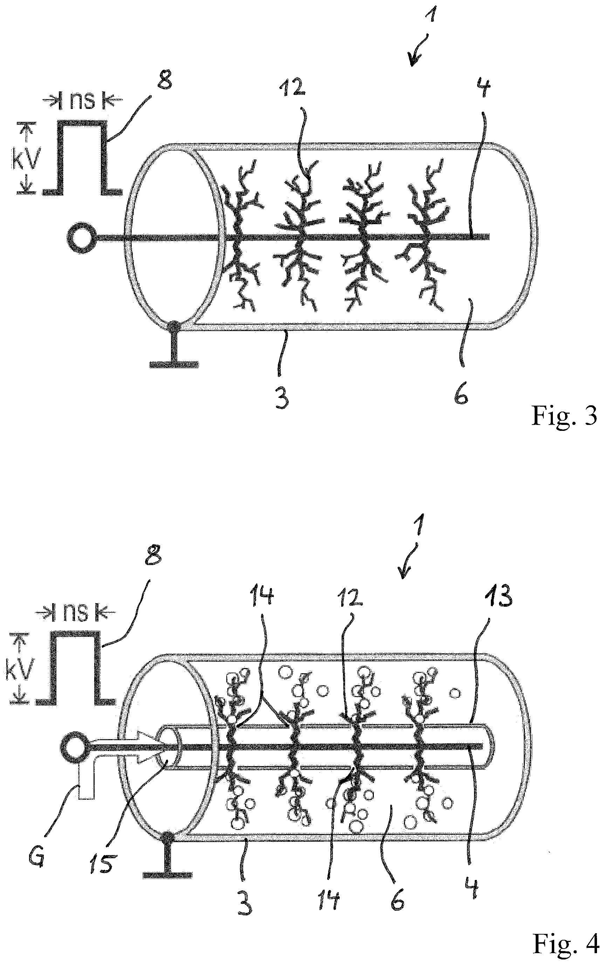

Figur 3 zeigt eine Skizze der aufgrund der fehlenden dielektrischen Flächenelemente nicht erfindungsgemäßen Einrichtung 1 aus Figur 1 mit skizzierten Koronaentladungen 12 im Fluidvolumen 6. Die Anode 4 wird dabei mit Hochspannungspulsen 8 beaufschlagt. Erkennbar ist, dass sich die Koronaentladungen 12 über die Länge der Anode 4 in Erstreckungsrichtung von der Anode 4 radial nach außen zur umgebenden Kathode 3 entfalten. Die Ausbreitung dieser Koronaentladungen 12 hängt neben der Spannungsamplitude wesentlich von der Dauer der Hochspannungspulse ab. Die Pulsdauer ist dabei so kurz zu wählen, dass die Energie der Hochspannungspulse effizient in einer Reaktionschemie umgesetzt wird und nicht durch Erwärmung von Plasma und des Fluids 5 unnötig verbraucht wird. Dies gelingt durch sehr kurze Pulsdauern im Bereich von 50 bis 400 Nanosekunden (FWHM).

Die Pulsanstiegszeit der Hochspannungspulse 8 hat sich als ein wesentliches Kriterium herausgestellt. Die Pulsanstiegszeit steht in einem direkten Zusammenhang mit der durch die Koronaentladungen 12 bewirkten Elektrodenchemie, die wiederum mit der Erzeugungsrate von Hydroxyl-Radikalen und der Intensität von anderen Plasmaprozessen korreliert, welche für die Inaktivierung von Mikroorganismen genutzt werden können. Entscheidend ist dabei, dass die Pulsanstiegszeit im Verhältnis zur Pulsdauer sehr kurz ist. Die Pulsanstiegszeiten mit Pulsdauern von 50 bis 400 Nanosekunden sollten dabei im Bereich von 1 bis 40 Nanosekunden liegen.

Die resultierenden Strompulse sollten dabei im Bereich von 1 bis 100 Nanosekunden Pulsdauer liegen. Solche kurzen Strompulse sind für die Erzeugung effizienter Koronaentladungen von Vorteil. Die Strompulse werden durch den Spannungspuls bestimmt. Eine schnelle Abfolge von Strompulsen lässt sich mit kurzen und möglichst stark gedämpften Strompulse, wie sie z. B. mit Hilfe einer mehrstufigen Marx-Bank erzeugt werden können, gut erreichen.

Die Pulswiederholraten sollten so gewählt sein, dass die Koronaentladungen weitestgehend abgeklungen sind, bevor eine neue Koronaentladung in dem betreffenden Gebiet hervorgerufen wird.

Mit dieser Einrichtung und dem entsprechenden Verfahren zur Fluidbehandlung lassen sich insbesondere pharmazeutische Rückstände signifikant abbauen. Nach Beaufschlagung eines Fluidvolumens mit etwa 6000 Pulsen bei einer Pulswiederholrate von 20 Hertz konnte der Gehalt von untersuchten pharmazeutischen Rückständen bereits etwa halbiert werden. Nach etwa 80000 Entladungen können in der Regel weit mehr als 80% von pharmazeutischen Rückständen entfernt werden. Das Verfahren hat sich als geeignet herausgestellt, um pharmazeutische Rückstände wie z.B. Carbamazepine, Diatrizoate, Diazepam, Diclofenac, Ethinylestradiol, Ibuprofen und Trimethropin weitestgehend aus einem Abwasser zu entfernen.

Bei dieser Fluidbehandlung wird zudem sichergestellt, dass schädliche Konzentrationen von Nitraten und Nitriten weitestgehend verhindert werden. Eine Nachbehandlung des Fluids 5 zur Reduktion des durch die Fluidbehandlung mit konventionellen Prozessen erhöhten Nitratund Nitritgehalts ist damit nicht erforderlich.

Zur Erhöhung der Effizienz der Fluidbehandlung sind Modifikationen an dem Grundaufbau der dargestellten Einrichtung denkbar. So können z. B. mehrere Anoden 4 z.B. mit Hilfe von parallelen Stäben oder Drähten gleichzeitig oder bevorzugt alternierend hintereinander mit Hochspannungspulsen 8 beaufschlagt werden. Diese mehreren Anoden 4 sind dabei im Fluidvolumen 6 bezogen auf eine gemeinsame Kathode 3 angeordnet.

Figur 4 lässt eine aufgrund der fehlenden dielektrischen Flächenelemente nicht erfindungsgemäße Einrichtung 1 erkennen, bei der die draht- oder stabförmige Anode 4 von einem nicht leitenden Rohr 13 umgeben ist. Das Rohr 13 hat Öffnungen 14, die über die Länge und den Umfang des Rohrs 13 verteilt angeordnet sind. Das Rohr 13 hat einen Gaseinlass 15 zum Einleiten eines Reaktionsgases G wie bspw. Sauerstoff. Die durch die Beaufschlagung der Anode 4 mit Hochspannungspulsen 8 erzeugten Koronaentladungen 12 brechen dabei die Gasmoleküle in wirksame Radikale auf, wie z.B. in atomares Sauerstoff. Die Koronaentladungen 12 erstrecken sich dabei von der Anode 4 ausgehend durch die Öffnungen 14 in das Fluidvolumen 6 hinein. Die Filamente der Koronaentladungen interagieren dabei sowohl mit dem eingeleiteten Reaktionsgas G und dem umgebenen Fluid 5.

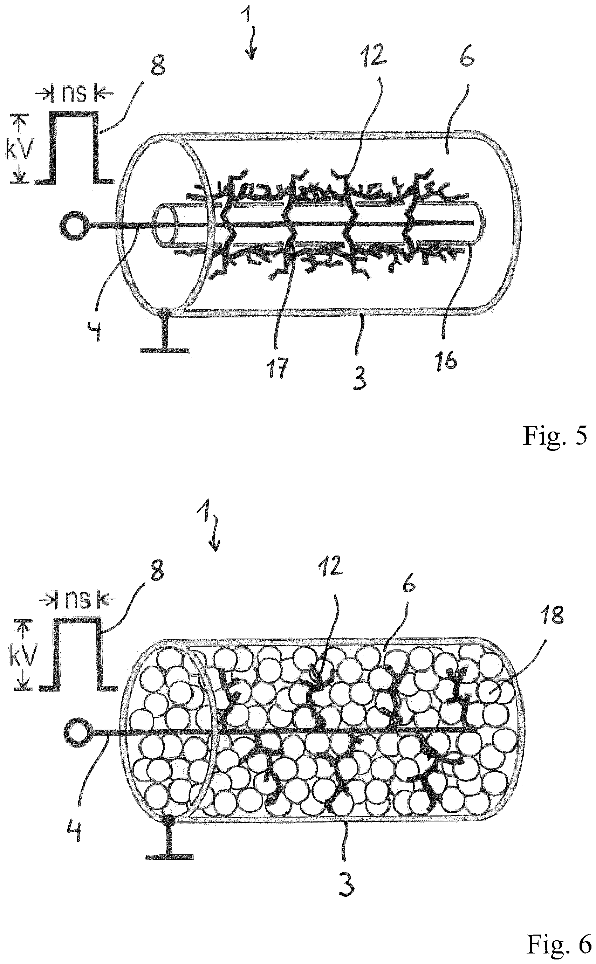

Figur 5 lässt eine Skizze einer aufgrund der fehlenden dielektrischen Flächenelemente nicht erfindungsgemäßen Einrichtung 1 zur Fluidbehandlung erkennen. Hierbei ist die draht- oder stabförmige Anode 4 wiederum mit einem umgebenen elektrisch nicht leitenden Rohr umgeben. Das Rohr 16 hat wiederum Öffnungen 17, durch die Koronaentladungen beim Beaufschlagen der Anode 4 mit Hochspannungspulsen 8 hindurch treten. Mit Hilfe eines solchen perforierten Rohrs 16, das die Anode 4 umgibt, treten die Filamente der Koronaentladungen 12 durch die Öffnungen 17 aus und erstrecken sich dann an der Oberfläche des perforierten Rohrs 16 entlang. Damit wird das von den Koronaentladungen 12 beaufschlagte Fluidvolumen 6 sehr wirksam erhöht. Die Filamente, die sich entlang des Dielektrikums erstrecken, haben eine andere Energieverteilung als die sich direkt in dem Fluid 5 erstreckenden Filamente, was zu einer wesentlich höheren Erzeugungsrate von Radikalen im Vergleich mit der einfachen in Figur 3 dargestellten Erzeugung von Koronaentladungen 12 direkt im Fluid 5 führt.

Anders als eine reine Beschichtung der Anode 4 mit einem porösen Material wird durch das umgebene perforierte Rohr 16 mit dedizierten Öffnungen 17 eine verbesserte Verteilung der Filamente der Koronaentladungen 12 mit einer noch wirksameren Energieverteilung bewirkt. Dies dürfte dem Umstand geschuldet sein, dass die Filamente der Koronaentladungen 12 von der Anode 4 ausgehend ungestört durch die Öffnungen 17 hindurch treten können, während sie sich bei einer porösen Beschichtung erst einmal einen geeigneten Weg suchen müssen.

Die mit der gemäß Figur 5 modifizierten Einrichtung 1 bewirkten physikalischen Mechanismen an der Schnittstelle zum dielektrischen Rohr 16 haben sich als besonders wirksam zum Abbau von chemischen Stoffen, wie Pharmazeutika herausgestellt.

Figur 6 lässt eine Einrichtung 1 erkennen. bei der in das Fluidvolumen 6 Füllelemente 18 z.B. in Form von Kugeln eingebracht sind, zwischen denen Zwischenräume vorhanden sind. Die bei der Beaufschlagung der Anode 4 mit Hochspannungspulsen 8 entstehenden Filamente der Koronaentladungen 12 können sich dabei durch den Zwischenraum zwischen den Füllelementen 18 hindurch erstrecken. Damit werden sehr effiziente Reaktionswege entlang der Füllelemente 18 sichergestellt.

Die Füllelemente 18 sind nicht leitend d.h. dielektrisch und haben entweder katalytische oder absorbierende Eigenschaften. Als katalytische Füllelemente 18 eignen sich vorzugsweise Materialien wie Titandioxid. Als Absorptionsmittel sind insbesondere siliziumdioxid- oder aluminiumhaltige Füllelemente 18 geeignet. Mit Hilfe solcher absorbierender oder katalytischer Füllelemente 18 können Synergieeffekte entlang der Oberflächen zur Erhöhung der Effizienz der Dekontamination des Fluids 5 genutzt werden.

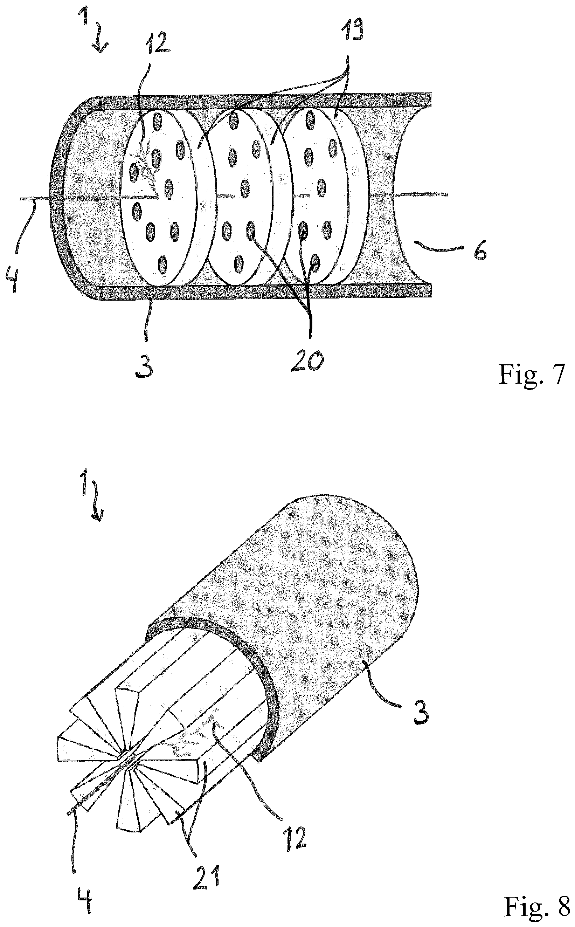

Figur 7 lässt eine erfindungsgemäße Ausführungsform der Einrichtung 1 erkennen. Hierbei sind in Erstreckungsrichtung der Anode 4 mehrere dielektrische Scheiben 19 angeordnet, die sich radial ausgehend von der Anode 4 zur zylinderförmigen Kathode 3 erstrecken. Mit Hilfe dieser dielektrischen Scheiben 19 gelingt es, dass sich die Filamente der Koronaentladungen 12 entlang der Oberfläche der dielektrischen Scheiben 19 quer zur Strömungsrichtung des Fluids 5 ausbreiten. Das quer zur Oberfläche der Scheiben 19 fließende Fluid wird somit sehr wirksam durch die mittels der Koronaentladungen 12 hervorgerufenen physikalischen und chemischen Effekte behandelt. In den dielektrischen Scheiben 19 sind Durchlassöffnungen 20 vorhanden, durch die das Fluid 5 hindurch strömen kann.

Figur 8 lässt eine andere erfindungsgemäße Ausführungsform der Einrichtung 1 zur Fluidbehandlung erkennen. Hierbei erstreckt sich wiederum eine draht- oder stabförmige Anode 4 koaxial zu einer zylinderförmigen Kathode 3 im Teilschnitt der dargestellten Kathode 3 hindurch. Von dieser Anode ragen im Abstand zur Anode 4 angeordnete dielektrische Flächenelemente 21 ab. Diese dielektrischen Flächenelemente 21 spannen eine Ebene in Erstreckungsrichtung der Anode und radial in einem Abschnitt zwischen Anode 4 und der umgebenden Kathode 3 auf. Die bei der Beaufschlagung der Anode 4 mit Hochspannungspulsen erzeugten Koronaentladungen 12 breiten sich dann mit ihren Filamenten auf der Oberfläche der Flächenelemente 21 ausgehend von der Anode 4 in Richtung Kathode 13 radial und in Erstreckungsrichtung der Anode 4 aus. Damit wird die für die Fluidbehandlung genutzte wirksame Oberfläche wesentlich erhöht, ohne dass die Durchströmungsbedingungen für das Fluid beeinträchtigt werden. Deutlich wird, dass die Flächenelemente 21 sternförmig über den Umfang der Anode 4 verteilt angeordnet sind. Sie können als im Querschnitt rechteckförmige Platten oder wie dargestellt als Elemente mit kreissegmentförmigem Querschnitt ausgestaltet sein.

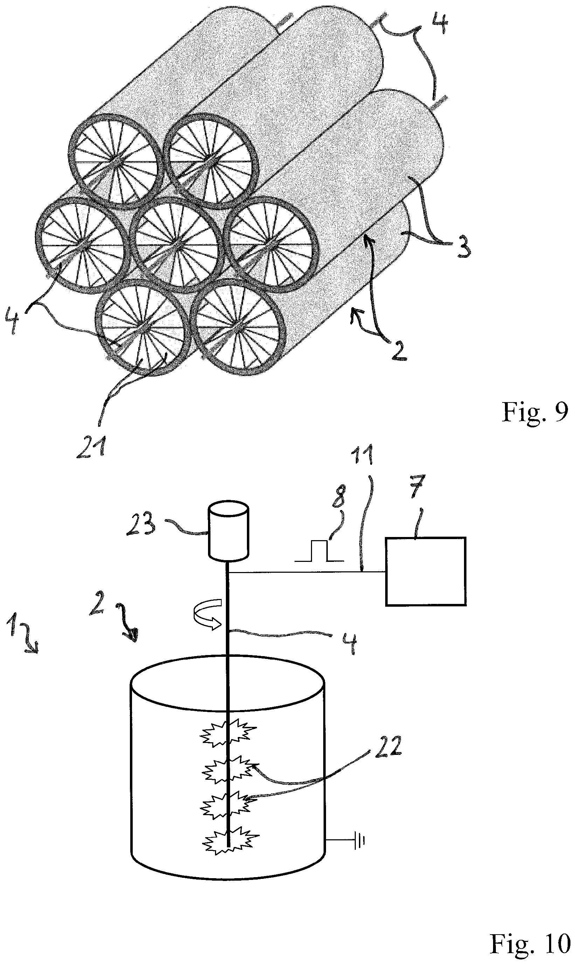

Figur 9 lässt eine Skizze einer erfindungsgemäßen Einrichtung 1 zur Fluidbehandlung erkennen, bei der mehrere Elektrodenanordnungen 2 parallel zueinander angeordnet sind. Damit kann das gesamte Fluidvolumen 6 bzw. die Fluiddurchsatzrate unter Sicherstellung einer effizienten Geometrie der Elektrodenanordnungen 2 sichergestellt werden. In dem dargestellten Ausführungsbeispiel sind innerhalb der Elektrodenanordnung 2 sich radial erstreckende dielektrische Flächenelemente 21 vorhanden. In entsprechender Weise könnten auch Elektrodenanordnungen 3 mit scheibenartigen Flächenelementen 19 oder mit Füllelementen 18 im Fluidvolumen 6 gemäß des Ausführungsbeispiels aus Figur 6 vorgesehen sein.

Figur 10 lässt eine andere aufgrund der fehlenden dielektrischen Flächenelemente nicht erfindungsgemäßen Einrichtung 1 erkennen. Hierbei ist die stabförmige Anode 4 der Elektrodenanordnung 2 um eine Drehachse rotierbar angeordnet. An der Anode 4 sind mitrotierende dielektrische Flächenelemente angeordnet. Die Anode 4 ist, wie durch den Drehpfeil angeordnet, rotierbar und wird mit einer Antriebseinheit 23 angetrieben. Die Rotationsfrequenz liegt dabei vorzugsweise im Bereich der Pulswiederholrate mit einer Toleranz von <±> 10%. Damit wird erreicht, dass das Plasma bei erneutem Beaufschlagen der Anode 4 mit einem Hochspannungspuls 8 in den Bereichen der neuen Koronafilamente weitgehend abgeklungen ist und die effiziente Energieumsetzung in Reaktionsprozesse nicht beeinträchtigt.

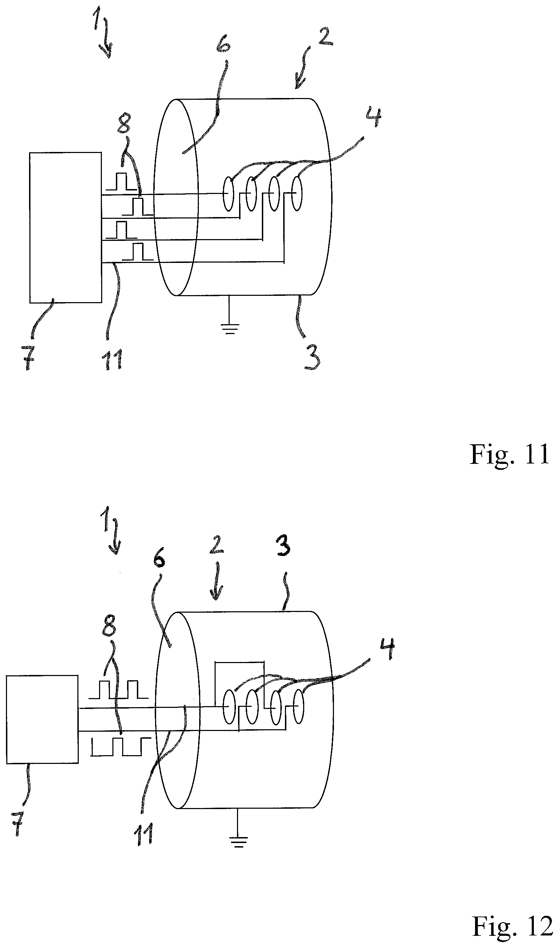

Figur 11 lässt eine aufgrund der fehlenden dielektrischen Flächenelemente nicht erfindungsgemäßen Einrichtung 1 zur Fluidbehandlung erkennen. Auch hier ist eine Elektrodenanordnung 2 vorgesehen, die aus einer zylinderförmigen Kathode 3 und einer Mehrzahl von Anoden 4 gebildet ist. Die mehreren Anoden 4 sind dabei im Fluidvolumen 6 innerhalb des von der Kathode 3 umschlossenen Raumes verteilt angeordnet und jeweils mit einer Zuleitung 11 mit der Hochspannungseinheit 7 verbunden. Die Hochspannungseinheit 7 ist bei dieser Ausführungsform so eingerichtet, dass die einzelnen Anoden 4 oder Gruppen von Anoden 4 alternierend hintereinander jeweils mit Hochspannungspulsen 8 beaufschlagt werden. Dies ist durch die angrenzend an die Zuleitung 11 (zeitlich) versetzt dargestellten Hochspannungspulse 8 angedeutet.

In der dargestellten Einrichtung 1 werden jeweils zwei entfernt voneinander angeordnete Anoden 4 gleichzeitig mit einem Hochspannungspuls 8 beaufschlagt. Die beiden Gruppen von Anoden 4 sind dabei so versetzt, dass bei einem Abklingvorgang nach Beaufschlagung einer Gruppe von Anoden 4 mit einem Hochspannungspuls 8 die mindestens eine weitere Gruppe von Anoden 4 bereits mit einem Hochspannungspuls 8 beaufschlagt werden kann, ohne dass die hierbei erzeugten Koronaentladungen durch den Abklingprozess beeinträchtigt werden. Die jeweils gleichzeitig beaufschlagten Anoden 4 einer Gruppe sind somit räumlich versetzt zu einer zeitlich vorher oder nachher beaufschlagten Gruppe von Anoden 4 angeordnet. Ausgehend von den Anoden 4 erstreckt sich eine Anzahl von dielektrischen Flächenelementen radial in Richtung der zugeordneten zylinderförmigen Kathode 3.

Figur 12 lässt eine aufgrund der fehlenden dielektrischen Flächenelemente nicht erfindungsgemäße Einrichtung 1 aus Figur 11 erkennen. Auch hier sind mehrere räumlich voneinander beabstandet im Innenraum der Kathode 3 angeordnete Anoden 4 vorgesehen. Bei diesem Ausführungsbeispiel sind z. B. jeweils zwei Anoden 4 zu einer Gruppe zusammengeschaltet und mit einer gemeinsamen Zuleitung 11 mit der Hochspannungseinheit 7 verbunden. Dabei werden die beiden Anodengruppen alternierend durch die zeitlich versetzte Hochspannungspulse 8 beaufschlagt. Ausgehend von den Anoden 4 erstreckt sich eine Anzahl von dielektrischen Flächenelementen radial in Richtung der zugeordneten zylinderförmigen Kathode 3.

In sämtlichen oben beschriebenen Ausführungsformen kann die Kathode 3 ein geschlossener, das Fluidvolumen nach Außen begrenzendes Zylinder oder ein am Außenumfang durch einen geschlossenen Behälter (z.B. ein Glaszylinder) begrenztes zylinderförmiges Gitter sein. Unter einem "Rohr" wird somit auch ein durchbrochendes Gitterrohr verstanden. Andere Geometrien, wie plattenförmige Elektroden sind denkbar.

## Patentansprüche

1. Einrichtung (1) zur Behandlung von Fluiden (5) in Form von Trinkwasser, Brauchwasser, Abwasser oder wässrigen Lösungen durch Erzeugung von Koronaentladungen in einem Fluidvolumen (6), wobei die Einrichtung eine Elektrodenanordnung (2) mit mindestens einer zylinderförmigen Kathode (3) und mindestens einer im Innenraum der Kathode (3) und im Abstand zur Kathode (3) angeordneten linienförmigen Anode (4) und eine Hochspannungseinheit (7) zur Erzeugung von Hochspannungspulsen (8) hat, wobei die Hochspannungseinheit (7) mit der Elektrodenanordnung (2) verbunden ist, um die mindestens eine Anode (4) mit Hochspannungspulsen (8) zu beaufschlagen, und wobei die Elektrodenanordnung (2) zur Aufnahme des zu behandelnden Fluids (5) im Raum zwischen der mindestens einen Kathode (3) und der mindestens einen Anode (4) eingerichtet ist, wobei die Hochspannungseinheit (7) zur Erzeugung von Hochspannungspulsen (8) mit Pulsanstiegszeiten im Bereich von 1 bis 40 Nanosekunden und einer Pulsdauer im Bereich von 50 bis 400 Nanosekunden eingerichtet ist, **dadurch gekennzeichnet, dass** sich ausgehend von der mindestens einen linienförmigen Anode (4) radial in Richtung der zugeordneten zylinderförmigen Kathode (3) eine Anzahl von dielektrischen Flächenelementen (19, 21) erstrecken.

2. Einrichtung (1) nach Anspruch 1, **dadurch gekennzeichnet, dass** die Hochspannungseinheit (7) zur Erzeugung der Hochspannungspulse (8) mit einer Pulswiederholrate im Bereich von 10 bis 1000 Hertz eingerichtet ist.

3. Einrichtung (1) nach Anspruch 2, **dadurch gekennzeichnet, dass** die Hochspannungseinheit (7) zur Erzeugung der Hochspannungspulse (8) mit einer Pulswiederholrate im Bereich von 50 bis 150 Hertz eingerichtet ist.

4. Einrichtung (1) nach einem der Ansprüche 1 bis 3, **dadurch gekennzeichnet, dass** die Hochspannungseinheit (7) zur Erzeugung der Hochspannungspulse (8) mit einer Spannungsamplitude von mehr als 5 Kilovolt eingerichtet ist.

5. Einrichtung (1) nach Anspruch 4, **dadurch gekennzeichnet, dass** die Hochspannungseinheit (7) zur Erzeugung der Hochspannungspulse (8) mit einer Spannungsamplitude im Bereich von 50 bis 200 Kilovolt und bevorzugt im Bereich von 50 bis 150 Kilovolt eingerichtet ist.

6. Einrichtung (1) nach einem der Ansprüche 1 bis 5, **dadurch gekennzeichnet, dass** eine Mehrzahl von dielektrischen Scheiben (19) in Längserstreckungsrichtung einer gemeinsamen Anode (4) hintereinander angeordnet sind, wobei sich die Anode (4) durch die dielektrischen Scheiben (19) erstreckt, sich die dielektrischen Scheiben (19) radial in Richtung der zugeordneten Kathode (3) erstrecken, und wobei die dielektrischen Scheiben (19) Durchlassöffnungen (20) zum Durchleiten des zu behandelnden Fluids (5) haben.

## Claims

1. An apparatus (1) for treating fluids (5) in the form of drinking water, service water, waste water or aqueous solutions by producing corona discharges in a fluid volume (6), wherein the apparatus has an electrode assembly (2) with at least one cylindrical cathode (3) and at least one linear anode (4) arranged in the interior of the cathode (3) and at a distance from the cathode (3), and a high voltage unit (7) to produce high-voltage pulses (8), wherein the high-voltage unit (7) is connected to the electrode assembly (2) in order to apply high-voltage pulses (8) to the at least one anode (4), and wherein the electrode assembly (2) is configured to accommodate the fluid (5) to be treated in the space between the at least one cathode (3) and the at least one anode (4), wherein the high-voltage unit (7) is configured to produce high-voltage pulses (8) with pulse rise times within a range of 1 to 40 nanoseconds and a pulse duration within a range of 50 to 400 nanoseconds, **characterized in that** a plurality of dielectric surface elements (19, 21) extend radially toward the associated cylindrical cathode (3) starting from the at least one linear anode (4).

2. The apparatus (1) according to claim 1, **characterized in that** the high-voltage unit (7) is configured to generate the high-voltage pulses (8) with a pulse repetition rate within a range of 10 to 1000 Hertz.

3. The apparatus (1) according to claim 2, **characterized in that** the high-voltage unit (7) is configured to generate the high-voltage pulses (8) with a pulse repetition rate within a range of 50 to 150 Hertz.

4. The apparatus (1) according to one of claims 1 to 3, **characterized in that** the high-voltage unit (7) is configured to generate the high-voltage pulses (8) with a voltage amplitude of more than 5 kilovolts.

5. The apparatus (1) according to claim 4, **characterized in that** the high-voltage unit (7) is configured to generate the high-voltage pulses (8) with a voltage amplitude within a range of 50 to 200 kilovolts, and preferably within a range of 50 to 150 kilovolts.

6. The apparatus (1) according to one of claims 1 to 5, **characterized in that** a plurality of dielectric discs (19) are arranged sequentially in the direction of the longitudinal extension of a common anode (4), wherein the anode (4) extends through the dielectric discs (19), the dielectric discs (19) extend radially toward the associated cathode (3), and wherein the dielectric discs (19) have passages (20) for conducting the fluid (5) to be treated.

## Revendications

1. Appareil (1) destiné au traitement de fluides (5) se présentant sous forme d'eau potable, d'eau industrielle, d'eaux usées ou de solutions aqueuses par la génération de décharges à effet de couronne dans un volume de fluide (6), dans lequel l'appareil possède un ensemble d'électrodes (2) doté d'au moins une cathode cylindrique (3) et d'au moins une anode linéaire (4) disposée à l'intérieur de la cathode (3) et à distance de la cathode (3) ainsi qu'une unité à haute tension (7) servant à générer des impulsions à haute tension (8), dans lequel l'unité à haute tension (7) est reliée à l'ensemble d'électrodes (2) pour appliquer des impulsions à haute tension (8) sur ladite anode (4) au moins, et dans lequel l'ensemble d'électrodes (2) est ajusté pour recevoir le fluide à traiter (5) dans l'espace entre ladite cathode (3) au moins et ladite anode (4) au moins, dans lequel l'unité à haute tension (7) servant à générer des impulsions à haute tension (8) est ajustée avec des temps de montée d'impulsion compris dans la plage de 1 à 40 nanosecondes et avec une durée d'impulsion comprise dans la plage de 50 à 400 nanosecondes, **caractérisé en ce qu'**un certain nombre d'éléments de surface diélectriques (19, 21) s'étendent radialement depuis ladite anode linéaire (4) au moins en direction de la cathode cylindrique (3) associée.

2. Appareil (1) selon la revendication 1, **caractérisé en ce que** l'unité à haute tension (7) servant à générer des impulsions à haute tension (8) est ajustée avec une fréquence de répétition d'impulsions comprise dans la plage de 10 à 1000 Hertz.

3. Appareil (1) selon la revendication 2, **caractérisé en ce que** l'unité à haute tension (7) servant à générer des impulsions à haute tension (8) est ajustée avec une fréquence de répétition d'impulsions comprise dans la plage de 50 à 150 Hertz.

4. Appareil (1) selon l'une des revendications 1 à 3, **caractérisé en ce que** l'unité à haute tension (7) servant à générer des impulsions à haute tension (8) est ajustée avec une amplitude de tension de plus de 5 kilovolts.

5. Appareil (1) selon la revendication 4, **caractérisé en ce que** l'unité à haute tension (7) servant à générer des impulsions à haute tension (8) est ajustée avec une amplitude de tension comprise dans la plage de 50 à 200 kilovolts et de préférence dans la plage de 50 à 150 kilovolts.

6. Appareil (1) selon l'une des revendications 1 à 5, **caractérisé en ce que** de multiples disques diélectriques (19) sont disposés les uns derrière les autres dans la direction d'extension longitudinale d'une anode (4) commune, dans lequel l'anode (4) passe à travers les disques diélectriques (19), les disques diélectriques (19) s'échelonnent radialement en direction de la cathode (3) associée, et dans lequel les disques diélectriques (19) possèdent des ouvertures de passage (20) pour laisser s'écouler le fluide à traiter (5).
